# FASCICULE DE BREVET EUROPEEN

(11) **EP 4 172 817 B1**
(45) Date de publication et mention de la délivrance du brevet: **24.07.2024**
(21) Numéro de dépôt: 21743553.6
(22) Date de dépôt: 25.06.2021
(51) Int. Cl.: G06F 21/10, G06Q 30/06, H04L 65/40, G06Q 50/04, G06Q 10/08, G06Q 30/0645, H04L 67/12

(54) **PROCEDE DE GESTION COLLABORATIVE DE LICENCES ENTRE DOMAINES INDUSTRIELS**
VERFAHREN ZUR KOLLABORATIVEN VERWALTUNG VON LIZENZEN ÜBER INDUSTRIELLE SEKTOREN HINWEG
METHOD FOR COLLABORATIVE MANAGEMENT OF LICENCES ACROSS INDUSTRIAL SECTORS

(30) Priorité: 29.06.2020 FR 2006826
(43) Date de publication de la demande: 03.05.2023
(73) Titulaire: Orange, 92130 Issy-les-Moulineaux (FR)
(72) Inventeur: FIEAU, Frédéric, 92326 Châtillon Cedex (FR); FROMENTOUX, Gaël, 92326 Châtillon Cedex (FR); STEPHAN, Emile, 92326 Châtillon Cedex (FR)
(74) Mandataire: Plasseraud IP
(86) Numéro de dépôt international: PCT/FR2021/051172
(87) Numéro de publication internationale: WO 2022/003282

(56) Documents cités:
- WO-A1-2015/019416
- WO-A1-2018/166398
- US-A1- 2003 236 820
- US-A1- 2010 031 033
- US-A1- 2016 205 216
- US-A1- 2020 065 005
- US-A1- 2020 099 591
- GEMALTO N V: "IFA034 LM scope in NFV-MANO", vol. WG NFV IFA Interfaces and Architecture, 27 November 2018 (2018-11-27), pages 1 - 8, XP014333286, Retrieved from the Internet <URL:docbox.etsi.org/ISG/NFV/IFA/05-CONTRIBUTIONS/2018/NFVIFA(18)000926r1_IFA034_LM_scope_in_NFV-MANO.docx> [retrieved on 20181127]

## Description

### Arrière-plan de l'invention

La présente description se rapporte au domaine des réseaux industriels et, plus précisément, à des procédés de gestion de licences de manière collaborative entre plusieurs domaines ou réseaux industriels.

Les domaines de la santé, des transports, de l'énergie, de l'industrie sont en cours de devenir des domaines majeurs d'utilisation des standards 5G en télécommunications. Ces standards 5G vont considérablement améliorer les débits, la connectivité, la latence ainsi que la fiabilité des communications dans le domaine de la production industrielle, dite « industrie 4.0 », par exemple pour commander des dispositifs connectés, pour piloter des systèmes cyber-physiques (ou « Cyber Physical System », en anglais) tels qu'un robot industriel, pour coordonner plusieurs machines-outils, ou encore pour transmettre et partager des données ou des services de manière sécurisée entre différents opérateurs.

Dans ce contexte, une difficulté rencontrée est de pouvoir disposer d'infrastructures répondant aux contraintes demandées par des collaborations inter domaines sécurisées. En particulier, les infrastructures des espaces industriels de données connus doivent répondre à des exigences toujours plus élevées en matière de sécurité des données, de robustesse, de temps de latence et de souveraineté numérique.

Ces exigences doivent tenir compte de règles communes éventuellement contraignantes pour plusieurs partenaires coopérant l'un avec l'autre. De telles règles communes sont importantes pour partager l'utilisation de systèmes communs entre différents donneurs d'ordre, tout en garantissant un niveau de sécurisation conforme aux exigences de chacun de ces acteurs.

Ces infrastructures doivent idéalement pouvoir fournir des solutions de contrôle en temps réel de processus de production intégrés, des solutions de stockage et de traitement hétérogènes de données de production, et des solutions de collaboration sécurisée en matière de protection des données à caractère public ou privé.

Toutefois, les procédés connus présentent plusieurs inconvénients.

En effet, les domaines industriels, et en particulier, les architectures réseau que comprennent ces domaines industriels, ne fournissent pas de moyen optimal pour partager, contrôler et gérer des licences d'applications de service entre différents domaines industriels.

Par exemple, les fournisseurs de services de communication utilisent de plus en plus de fonctions de réseau virtuel (ou VNF, pour « Virtual Network Function », en anglais) pour améliorer leur offre de produits au regard du déploiement de services de télécommunications et de calcul de pointe. Ces VNFs sont des entités logicielles fournissant des applications de service qui peuvent être déployées rapidement dans différents réseaux, et présentent des règles et des conditions d'accès ou d'utilisation fixées par leurs fournisseurs. En particulier, leurs droits d'accès ou d'utilisation, payants, sont régis par ces mêmes fournisseurs, ce qui nécessite la mise en place de mécanismes de contrôle du bon respect de ces règles et conditions.

Le document WO2018166398 par exemple décrit la gestion de licence dans un réseau VNF.

Or, la décentralisation de plus en plus importante des composants réseaux entraîne également une augmentation croissante des flux de données associés à la gestion et à la mise en oeuvre de ces licences.

Notamment, il n'est actuellement pas possible de gérer des licences entre plusieurs domaines industriels interconnectés tout en minimisant le surplus de trafic et le temps de latence induits par une telle gestion.

Ceci est particulièrement problématique dans le cadre de la gestion collaborative de licences entre plusieurs domaines industriels lorsqu'un grand nombre de domaines industriels est concerné ou lorsque ces domaines industriels présentent des capacités ou des niveaux de sécurisation différents.

Il existe donc un besoin d'améliorer les procédés de gestion de licences d'applications de service, et donc des droits d'accès ou d'utilisation de ces applications de service.

### Objet et résumé de l'invention

Afin de répondre à ce ou à ces inconvénients, il est proposé selon un premier objet des présentes un procédé de gestion de licences d'une application de service entre une pluralité de domaines industriels connectés entre eux, le procédé comprenant les étapes:
- sélectionner, avec un premier domaine industriel de la pluralité de domaines industriels, une politique de délégation de l'application de service à un deuxième domaine industriel de la pluralité de domaines industriels ;
- déployer, depuis le premier domaine industriel, dans le deuxième domaine industriel, un gestionnaire local virtuel de licences ; et
- transmettre, depuis le premier domaine industriel, une licence de l'application de service audit gestionnaire local virtuel de licences, la licence autorisant l'utilisation de l'application de service par le deuxième domaine industriel.

Dans les présentes, une application de service est une application configurée pour exécuter un service au sein d'un domaine industriel, par exemple un service de gestion de conditions environnementales, un service de communication inter- terminaux, un service de collecte de données ou de mesures physiques, un service de partage d'informations entre domaines industriels, un service de commande d'un système cyber-physique tel qu'une machine-robot, etc. Une application de service est par exemple une fonction de réseau virtuel, appelée ci-après fonction virtualisée ou fonction virtuelle VNF.

Dans les présentes, une fonction virtualisée ou virtuelle est typiquement fournie par un fournisseur, par exemple un espace industriel de données, et est définie comme comprenant un ensemble de composants logiciels exécutables sur un serveur tel qu'une machine virtuelle (VM, ou « Virtual Machine », en anglais), ou un conteneur (en anglais Container).

Des exemples de fonctions virtualisées comprennent des fonctions de périphérie telles que SD-WAN, vCPE ou IP Edge, des fonctions de commutation ou de routage telles que BNG ou CG-NAT, des fonctions de passerelle telles que VPN ou SSL, des fonctions d'analyse de trafic (DPI) ou de mesure de qualité (QoE), des fonctions de signalisation, des fonctions de contrôle de politiques ou encore des fonctions de sécurité telles que des pare-feu, des systèmes de détection d'intrusions, des détecteurs de virus, etc.

Dans les présentes, une licence d'une application de service est un droit temporaire qui est accordé par un fournisseur de cette application de service à l'intention d'un tiers et autorisant ce dernier à accéder à ou utiliser cette application de service. Optionnellement, cette licence peut aussi autoriser ce tiers à accéder aux données récoltées par l'intermédiaire de cette application de service et/ou d'utiliser cette application de service pour déclencher une action ou un évènement de manière distante.

Dans les présentes, en particulier, une licence peut être définie en fonction de règles et de conditions d'utilisation de l'application de service pour laquelle elle accorde des droits, par exemple un droit d'utilisation d'une fonction virtuelle VNF correspondante. Un tiers disposant d'une licence peut utiliser cette application de service pour autant qu'il respecte les règles et conditions fixées par le fournisseur de l'application de service.

Le premier objet des présentes permet une collaboration directe entre différents domaines industriels par l'intermédiaire d'un déploiement d'une délégation et d'un système de gestion optimal de licences d'applications de service, ce système minimisant les temps de latence et le trafic de données entre ces domaines industriels.

La gestion de la délégation permet d'étendre le domaine d'utilisation à un autre acteur, ici le deuxième domaine industriel, et relève d'un contrôle et de l'extension de droits d'utilisation de l'application de service par le premier domaine industriel.

Avantageusement, ceci permet la mise en oeuvre d'une gestion directe, collaborative, rapide et sécurisée de licences d'applications de service entre une pluralité de domaines. En outre, cette gestion est configurable conformément à un cadre de gouvernance pouvant être prédéfini par le fournisseur de l'application de service, et permet de garantir un contrôle continu de ces licences.

Dans les présentes, une politique de délégation comprend un ensemble de règles définissant un accès distant à l'application de service, ces règles pouvant dépendre de paramètres de collaboration entre plusieurs domaines industriels. De telles règles comprennent par exemple un protocole de délégation associé à cette politique de délégation, une priorité d'utilisation, une contrainte de configuration, une durée de délégation, une contrainte de connectivité réseau ou encore un paramètre de sécurité.

Dans les présentes, la politique de délégation comprend par exemple un protocole de délégation choisi parmi un protocole ACME/STAR, un protocole PKCS #11, un protocole SubCerts ou encore un protocole LURK.

Dans une réalisation préférée, le déploiement du gestionnaire local virtuel de licences est mis en oeuvre par l'intermédiaire d'un canal sécurisé de communication, le procédé comprenant en outre configurer, en fonction de la politique de délégation sélectionnée, ledit canal sécurisé de communication étant établi entre un premier connecteur sécurisé du premier domaine industriel et un deuxième connecteur sécurisé du deuxième domaine industriel.

Ceci permet de mettre en oeuvre une interface et un interfonctionnement entre les deux domaines industriels, l'échange de données entre ceux-ci étant régi par des règles de gouvernance bien définies.

Avantageusement, le niveau de sécurité du canal sécurisé de communication ainsi établi et/ou configuré, et donc des données échangées par son intermédiaire, peut être adapté en fonction des circonstances, et par exemple, en fonction de règles de gouvernance, de la licence transmise, de la politique de délégation sélectionnée, de la disponibilité du canal sécurisé de communication, de la fiabilité du canal sécurisé de communication, ou encore de sa nature fixe ou cellulaire.

Dans une autre réalisation possible, la sélection de la politique de délégation et/ou la configuration du canal sécurisé de communication est mise en oeuvre sur établissement d'un accord de collaboration entre le premier et le deuxième domaine industriel, et/ou sur réception, depuis un espace industriel de données, d'une requête d'accès à l'application de service, d'une requête d'utilisation de l'application de service ou d'une requête de licence de l'application de service.

Dans les présentes, l'espace industriel de données est un dispositif propriétaire de l'application de service qui est adapté pour fournir celle-ci et une licence de celle-ci.

Dans une réalisation préférée, la transmission de la licence de l'application de service au gestionnaire local virtuel de licences comprend une fourniture de la licence au premier connecteur sécurisé et/ou au deuxième connecteur sécurisé.

Ceci permet de s'assurer que la transmission de la licence entre plusieurs domaines industriels soit mise en oeuvre par l'intermédiaire du canal de communication entre les deux. En outre, la présence de la licence sur au moins l'un des deux connecteurs sécurisés permet de contrôler celle-ci en au moins l'une des extrémités du canal de communication après le déploiement du gestionnaire local virtuel de licences ou avant toute autre opération ultérieure faisant intervenir la licence.

Dans une réalisation possible, la fourniture de la licence est mise en oeuvre depuis le gestionnaire de licences du premier domaine industriel à destination du premier connecteur sécurisé.

Dans une variante de cette réalisation possible, la fourniture de la licence est mise en oeuvre depuis le gestionnaire de licences du deuxième domaine industriel à destination du deuxième connecteur sécurisé.

Dans une réalisation préférée, la configuration du canal sécurisé de communication comprend une mise à jour du deuxième connecteur sécurisé par rapport au premier connecteur sécurisé.

Dans une réalisation possible, la mise à jour du deuxième connecteur sécurisé comprend une activation d'au moins une fonction virtuelle commune au premier et au deuxième domaine industriel.

Par exemple, ladite fonction virtuelle commune est configurée pour permettre une collaboration sécurisée entre les deux domaines industriels, la sécurisation de cette collaboration étant permise au moyen d'un partage de clés et/ou de certificats propres aux deux connecteurs sécurisés et autorisant ceux-ci à collaborer.

Ceci permet de garantir que le niveau de conformité et/ou de sécurité du deuxième domaine industriel au regard de l'accès et/ou de l'utilisation de l'application de service au moyen de la licence transmise est suffisant par rapport au niveau de conformité et/ou de sécurité du premier domaine industriel.

Si ce n'est pas le cas, par exemple lorsque le paramètre vérifié de conformité du deuxième domaine industriel par rapport au premier domaine industriel ne présente pas un niveau suffisant, le premier connecteur sécurisé peut par exemple renseigner au deuxième connecteur sécurisé des fonctions activables par le deuxième domaine industriel, l'activation de ces fonctions permettant d'atteindre le niveau de conformité et/ou de sécurité souhaité. Des clés ou des certificats peuvent aussi être renseignés de manière analogue.

Dans une réalisation préférée, l'application de service est configurée pour commander un système cyber-physique du premier domaine industriel, le procédé comprenant en outre, sur réception de la licence par le gestionnaire local virtuel de licences, exécuter une commande du système cyber-physique au moyen de l'application de service.

Ceci permet d'étendre l'empreinte d'un domaine industriel en permettant un contrôle distant d'un système cyber-physique depuis un autre domaine industriel, disposant de la licence de l'application de service. Une délégation ad hoc est effectuée par le biais de la communication établie au moyen des deux connecteurs sécurisés entre les deux domaines industriels, de sorte que le deuxième domaine industriel loue un système cyber-physique du premier domaine industriel, la gestion de licence associée à cette location étant mise en oeuvre par le biais du gestionnaire local virtuel de licences.

Dans une réalisation possible, l'exécution de la commande du système cyber-physique est mise en oeuvre par le gestionnaire local virtuel de licences.

Dans une réalisation possible, l'exécution de la commande du système cyber-physique est mise en oeuvre sur réception, par le premier domaine industriel, d'un message d'approbation émis par le gestionnaire local virtuel de licences du deuxième domaine industriel.

Dans une réalisation possible, l'exécution de la commande du système cyber-physique est mise en oeuvre sur réception du message d'approbation par le système cyber-physique du premier domaine industriel.

Dans une réalisation préférée, l'exécution de la commande du système cyber-physique est mise en oeuvre sur échange, entre le premier domaine industriel et le gestionnaire local virtuel de licences du deuxième domaine industriel, d'une paire requête-réponse de la licence.

Ceci permet de mettre en oeuvre l'exécution de la commande du système cyber-physique sur la base d'une communication directe entre le premier domaine industriel et le gestionnaire local virtuel de licences du deuxième domaine industriel, sans nécessiter d'intervention d'autres éléments du deuxième domaine industriel. Plusieurs gestionnaires de licences peuvent ainsi être mis en relation, ceux-ci étant exclusivement responsables de la gestion de licences.

Dans une réalisation préférée, l'échange de la paire requête-réponse de la licence comprend une vérification de la licence transmise et/ou de la politique de délégation de l'application de service, la vérification étant mise en oeuvre par l'un au moins parmi le premier connecteur sécurisé et le deuxième connecteur sécurisé.

Ceci permet de garantir que la licence et/ou la politique de délégation a bien été fournie au deuxième domaine industriel, ce qui augmente le niveau de sécurisation du procédé. Il est ainsi possible d'améliorer la configuration d'un système de gestion de licences d'une application de service fournie à un domaine industriel, de même que leur surveillance, leur contrôle et leur suivi au cours du temps.

Dans une réalisation préférée, le déploiement du gestionnaire local virtuel de licences comprend un téléchargement préalable d'une machine virtuelle dans le deuxième domaine industriel depuis le premier domaine industriel, le gestionnaire local virtuel de licences étant déployé par ladite machine virtuelle.

Ceci permet de limiter le nombre d'opérations mises en oeuvre par le premier domaine industriel, puisqu'une fois le canal de communication créé, le premier domaine industriel doit uniquement fournir la machine virtuelle et les éventuelles mises à jour de la licence au deuxième domaine industriel.

Ainsi, on limite aussi les remontées de données et de flux, par exemple les demandes de vérification des licences, ce qui réduit les temps de latence. Ceci permet aussi de déporter le contrôle de l'application de service tout en conservant leur contrôle.

Dans les présentes, une machine virtuelle est une fonction virtualisée configurée pour être installée ou supprimée sur un composant réseau d'un domaine industriel, par exemple un noeud d'une infrastructure réseau de ce domaine industriel, notamment un serveur informatique.

Dans les présentes, un déploiement d'un gestionnaire local virtuel de licences équivaut à mettre en oeuvre une instanciation, le gestionnaire local virtuel de licences correspondant ici à une fonction VNF. Une telle instanciation comprend donc une copie, dans le deuxième domaine industriel, d'un gestionnaire original de licences situé hors du deuxième domaine industriel, par exemple dans le premier domaine industriel, et sur la base d'un contenu de la machine virtuelle.

Dans une réalisation possible, le téléchargement de la machine virtuelle est mis en oeuvre par l'intermédiaire du canal de communication configuré entre le premier connecteur sécurisé et le deuxième connecteur sécurisé. En particulier, la machine virtuelle est installée dans le deuxième domaine industriel à partir du deuxième connecteur sécurisé.

Dans une variante, le déploiement du gestionnaire local virtuel de licences comprend un téléchargement préalable d'un conteneur dans le deuxième domaine industriel depuis le premier domaine industriel, le gestionnaire local virtuel de licences étant déployé par ledit conteneur.

Dans les présentes, un conteneur est une entité logique ou physique capable de détenir de l'information, et en particulier, configurée pour encapsuler des composants logiciels. Optionnellement, un tel conteneur définit un environnement d'exécution desdits composants logiciels, ce qui permet par exemple leur suivi, leur instanciation ou encore la gestion de leurs interactions avec d'autres entités ou d'autres fonctions.

Dans une réalisation préférée, le procédé comprend en outre un verrouillage, une désinstallation ou une destruction de la machine virtuelle.

De préférence, ledit verrouillage, ladite désinstallation ou ladite destruction est mise en oeuvre lorsqu'au moins l'un parmi la politique de délégation et le canal de communication est interrompu.

Dans une variante, ladite machine virtuelle est le conteneur préalablement téléchargé dans le deuxième domaine industriel depuis le premier domaine industriel.

Ceci permet d'interrompre une délégation ou un canal de communication établi entre deux domaines industriels lorsqu'un ou plusieurs conditions de collaboration ne sont pas remplies, par exemple lorsqu'un système cyber-physique à commander au moyen de l'application de service n'est pas disponible ou hors-service, lorsque les connecteurs sécurisés ne sont pas conformes à ce qui est souhaité, lorsque l'un des domaines industriels n'a pas un niveau de sécurisation suffisant, etc.

De manière générale, ceci permet aussi de fournir une protection contre la copie ou la duplication de la machine virtuelle ou du conteneur par un tiers qui ne serait pas autorisé à le faire, par exemple un tiers ne disposant pas de la licence associée.

Dans une réalisation préférée, le procédé comprend en outre un comptage:
- d'un nombre de gestionnaires locaux virtuels de licences déployés depuis le premier domaine industriel, dans le deuxième domaine industriel ; et/ou
- d'un nombre de licences de l'application de service transmises, depuis le premier domaine industriel, au gestionnaire local virtuel de licences.

De préférence, les gestionnaires locaux virtuels de licences dont un nombre est compté comprennent les gestionnaires locaux virtuels de licences déployés depuis le premier domaine industriel, dans le deuxième domaine industriel par l'intermédiaire du canal sécurisé de communication.

Selon cette réalisation, au moins deux licences distinctes sont transmises à un ou plusieurs gestionnaires locaux virtuels de licences déployés dans le deuxième domaine industriel. Des licences distinctes sont par exemple des licences d'une même application de service mais définies au moyen de règles ou de paramètres différents, ou des licences d'applications de service différentes.

Avantageusement, la transmission, et donc la mise en oeuvre, d'une pluralité de licences distinctes permet d'en effectuer un comptage à des fins de contrôle.

On peut ainsi par exemple compter un nombre de licences transmises au cours d'une période de temps prédéterminée, un nombre de déploiements de machines virtuelles (ou de conteneurs), ces machines virtuelles pouvant être téléchargées préalablement à la transmission de chaque licence dans le deuxième domaine industriel depuis le premier domaine industriel. On peut aussi effectuer un comptage d'un nombre de mises à jour du gestionnaire local virtuel de licences, lorsque ces mises à jour sont mises en oeuvre par chaque machine virtuelle téléchargée.

Dans une réalisation possible, le procédé comprend un comptage de téléchargements préalables de la machine virtuelle dans le deuxième domaine industriel depuis le premier domaine industriel, le gestionnaire local virtuel de licences étant déployé par ladite machine virtuelle

Dans une réalisation possible, le procédé comprend en outre un comptage d'un nombre de verrouillages, de désinstallations ou de destruction de la machine virtuelle lorsqu'au moins l'un parmi la politique de délégation et le canal de communication est interrompu

On peut ainsi connaître, à tout moment, le nombre de gestionnaires locaux virtuels de licences déployés, de licences de l'application de service transmises et de machines virtuelles préalablement téléchargées, verrouillées, désinstallées et/ou détruites dans le deuxième domaine industriel.

Dans une réalisation préférée, le premier et le deuxième domaine industriel est un réseau informatique de périphérie à accès multiples.

Dans les présentes, un réseau informatique de périphérie à accès multiples, aussi appelé réseau MEC (pour « Multi-Access Edge Computing », en anglais), est un type particulier de domaine industriel. Le groupe ETSI (« European Télécommunications Standards Institute », en anglais) a défini des spécifications techniques précises et relatives à des architectures réseau compatibles avec les standards de l'informatique de périphérie multi-accès. Selon ces spécifications techniques, un réseau MEC est configuré pour héberger des applications de services en une localisation très proche de l'utilisateur (« end user », en anglais) et/ou de terminaux externes au système. Ceci permet de stocker et de traiter des données avec un temps de réponse plus rapide que les infrastructures et les réseaux traditionnels.

En outre, un réseau MEC est conçu pour pouvoir être installé physiquement et directement en différentes localisations d'un réseau fourni par un opérateur, et par exemple dans des stations de base ou à proximité de celles-ci, ou dans des infrastructures appartenant à des utilisateurs ou à des industries spécifiques.

Les données collectées ou utilisées auprès de ces utilisateurs et industries permettent le déploiement de services réseaux de l'industrie 4.0 sur des infrastructures connectées à des réseaux en nuage (en anglais Cloud) hétérogènes, c'est-à-dire reposant sur différentes technologies d'accès et différents types de ressources distribuées. Dans les présentes, un réseau de périphérie peut être un réseau en nuage.

Etant donné que l'architecture des réseaux MEC définit un espace d'échange et de contrôle de données permettant aux industries une meilleure flexibilité dans la mise en commun de leurs ressources, les réseaux MEC permettent d'améliorer considérablement le partage de données et la gestion de licences d'applications de service sur un site industriel.

Selon un autre objet des présentes, il est proposé un serveur de données industrielles pour contrôler des licences d'une application de service gérées entre une pluralité de domaines industriels connectés entre eux, ledit serveur étant agencé pour être connecté à un domaine industriel de ladite pluralité de domaines industriels et configuré pour mettre en oeuvre des étapes du procédé selon l'une quelconque des réalisations précédentes.

Dans une réalisation possible, le serveur de données industrielles est configuré pour mettre en oeuvre:
- la sélection de la politique de délégation de l'application de service au deuxième domaine industriel de la pluralité de domaines industriels ; et/ou
- la configuration, en fonction de la politique de délégation sélectionnée, du canal de communication entre le premier connecteur sécurisé du premier domaine industriel et le deuxième connecteur sécurisé du deuxième domaine industriel.

Dans une réalisation possible, le serveur de données industrielles est configuré pour mettre en oeuvre :
- le déploiement, dans le deuxième domaine industriel, et par l'intermédiaire du canal sécurisé de communication, du gestionnaire local virtuel de licences ; et
- la transmission de la licence de l'application de service audit gestionnaire local virtuel de licences, la licence autorisant l'utilisation de l'application de service par le deuxième domaine industriel.

Dans une réalisation possible, le premier domaine industriel comprend le serveur de données industrielles ou est connecté au serveur de données industrielles.

Selon un autre objet des présentes, il est proposé un programme informatique comportant des instructions pour la mise en oeuvre du procédé selon l'une des réalisations du premier objet, lorsque lesdites instructions sont exécutées par un processeur d'un circuit de traitement informatique.

Selon encore un autre objet des présentes, il est proposé un support de stockage d'informations, amovible ou non, partiellement ou totalement lisible par un ordinateur ou un processeur comportant des instructions de code d'un programme d'ordinateur pour l'exécution de chacune des étapes du procédé selon l'une quelconque des réalisations du premier objet.

### Brève description des dessins

D'autres caractéristiques, détails et avantages apparaîtront à la lecture de la description détaillée ci-après, et à l'analyse des dessins annexés, sur lesquels :
[Fig. 1], la figure 1 représente une vue schématique d'un exemple de connexion entre deux domaines industriels, selon une réalisation ;
[Fig. 2], la figure 2, représente sous forme d'organigramme, des étapes d'un procédé de gestion de licences entre deux domaines industriels, selon une réalisation ;
[Fig. 3], la figure 3, représente sous forme de diagramme de flux des étapes d'un procédé de gestion de licences, selon une réalisation ; et
[Fig. 4], la figure 4, représente un bloc-diagramme schématique d'un circuit de traitement informatique, selon une réalisation.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

### Description des modes de réalisation

Les dessins et la description ci-après contiennent, pour l'essentiel, des éléments de caractère certain. Ils pourront donc servir à mieux faire comprendre la présente divulgation et à contribuer à sa définition, le cas échéant.

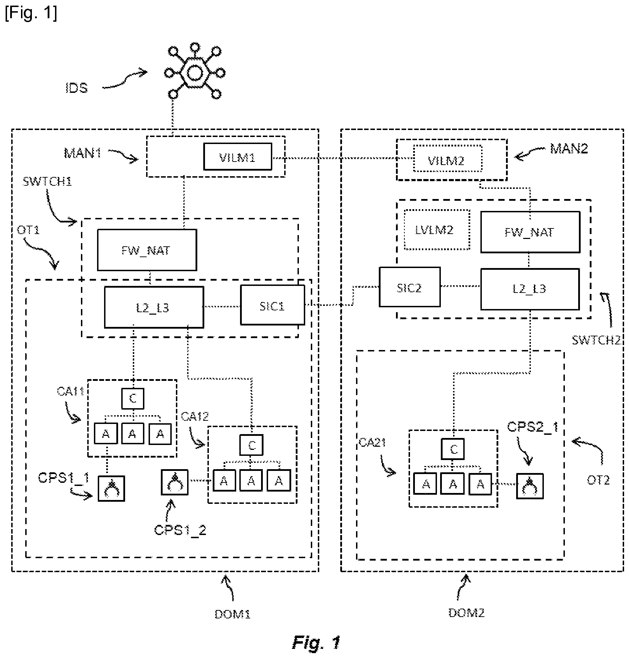

Il est maintenant fait référence à la figure 1, qui représente un exemple d'architectures de domaines industriels connectés entre eux, et adaptés pour permettre une gestion de licences d'une ou de plusieurs applications de service comme décrit par la suite.

Dans les présentes, les termes « domaine industriel » et « architecture » sont utilisés de manière interchangeable. Les termes « domaine industriel » et « domaine MEC » sont utilisés de manière interchangeable dans le cas où un domaine industriel est formé par une architecture propre à un réseau informatique de périphérie à accès multiple.

Au moins l'un des deux domaines industriels DOM1 et DOM2 est relié ou connecté à un espace industriel de données IDS. L'espace industriel de données IDS comprend par exemple un réseau en nuage, et permet de fournir des logiciels ou des applications de service.

Dans différents exemples, l'espace industriel de données IDS est un serveur industriel de données, ledit serveur industriel de données étant relié au premier domaine industriel DOM1, étant compris dans le premier domaine industriel DOM1. Le premier domaine industriel DOM1 peut aussi être constitué dudit serveur industriel de données IDS.

Comme illustré, l'espace industriel de données IDS est directement relié au premier domaine industriel DOM1 par l'intermédiaire d'un module gestionnaire MAN1 de DOM1, ce module gestionnaire étant par exemple un module plateforme de périphérie à accès multiple si le domaine DOM1 est un réseau informatique de périphérie à accès multiple.

Les domaines DOM1 et DOM2 sont reliés ou connectés entre eux par au moins une interface inter-domaines, par exemple par l'intermédiaire d'une connexion entre le module gestionnaire MAN1 et un module gestionnaire MAN2 de DOM2, cette connexion pouvant être établie en particulier entre des instances VILM de fonctions virtuelles de ces mêmes modules gestionnaires.

Si chacun des domaines DOM1 et DOM2 est un réseau informatique de périphérie à accès multiple, les modules gestionnaires MAN1 et MAN2 sont de préférence des modules de services propres à l'architecture des domaines MEC.

La ou les applications de service sont ici destinée(s) à l'exécution de commandes d'un système cyber-physique CPS, par exemple pour contrôler un robot d'un tel système cyber-physique, et fournie(s) par un espace industriel de données IDS, aussi appelé espace client, et auquel le premier domaine DOM1 a accès.

De manière générale, l'espace industriel de données IDS permet en outre un contrôle et une analyse de données fournies par les domaines industriels DOM1 et DOM2. Ce contrôle et cette analyse de données est de préférence régie par les règles de l'industrie 4.0 pour le traitement massif de données. L'espace industriel de données IDS est configuré de sorte que DOM1 et DOM2 dépendent de mêmes règles de gouvernance industrielle.

Comme décrit dans la suite, ces règles de gouvernance peuvent notamment comprendre des règles de collaboration inter-domaines, des règles pour la mise en oeuvre de politiques de délégation, des règles de création de canaux de communication inter-domaines sécurisés, des règles de mise en oeuvre de gestion de licence, etc.

En particulier, les règles définies par l'espace industriel de données IDS autorisent le deuxième domaine industriel DOM2 à solliciter le premier domaine industriel DOM1 dans le cadre d'une location ou d'une utilisation à distance d'un système cyber-physique.

L'espace industriel de données IDS est par exemple opéré par un tiers distinct des opérateurs des domaines industriels DOM1 et DOM2. L'espace industriel de données IDS1 est par exemple un fournisseur d'applications de services et/ou une entité propriétaire de logiciels permettant de commander des systèmes cyber-physiques.

En particulier, l'espace industriel de données IDS souhaite mettre en oeuvre une location d'un système cyber-physique CPS1_1 ou CPS1_2 qui est opéré par le premier domaine industriel DOM1.

Le premier domaine industriel DOM1 comprend un site d'exploitation OT (OT désignant le terme technologie d'exploitation, ou « Operational Technology » en anglais), ici OT1, par exemple une première ligne de production, ce site d'exploitation OT1 pouvant être connecté à un réseau industriel IT (IT désignant le terme technologie d'information, ou « Information Technology » en anglais) comprenant un réseau en nuage, un réseau filaire, etc.

De manière similaire, le deuxième domaine industriel DOM2 comprend un site d'exploitation OT2, par exemple une deuxième ligne de production qui est parallèle à OT1 mais qui n'est pas reliée à celle-ci. Cette deuxième ligne de production d'OT2 peut aussi être connectée à un réseau industriel IT.

Dans l'exemple représenté ici, l'interface inter-domaines entre les domaines DOM1 et DOM2 est mise en oeuvre de préférence entre un module de commutation SWTCH1 de DOM1 et un module de commutation SWTCH2 de DOM2. Des interfaces inter-domaines peuvent aussi être mise en oeuvre entre les domaines de production OT1 et OT2.

Si les domaines industriels DOM1 et DOM2 sont des réseaux informatiques de périphérie à accès multiple, les modules de commutation SWTCH1 et SWTCH2 sont de préférence des modules gestionnaires de plateforme propres à l'architecture des domaines MEC.

De manière générale, chacun des modules de commutation SWTCH1 et SWTCH2 comprend un sous-module de commutation L2_L3, qui inclut un commutateur L2 Ethernet, appelé pont L2, et un commutateur de routage IP, appelé pont L3. Le pont L2 permet de transmettre des paquets de données Ethernet en fonction de leur adresse MAC de destination. Le pont L3 permet de transmettre des paquets de données en fonction de leur adresse IP de destination, et possède une ou plusieurs interfaces autres qu'Ethernet, par exemple SONET/SDH, ATM, etc.

Chacun des modules de commutation SWTCH1 et SWTCH2 comprend en outre un sous-module de sécurité FW_NAT, aussi appelé passerelle de sécurité, qui est connecté au sous-module de commutation L2_L3 et qui inclut un pare-feu FW ainsi qu'un traducteur d'adresse réseau NAT. Les modules de commutation SWTCH1 et SWTCH2 peuvent en outre comprendre d'autres sous-modules séparant le domaine de production OT du domaine ou le réseau industriel IT par une ou plusieurs autres passerelles de sécurité.

Chacun des modules de commutation SWTCH1 et SWTCH2 comprend en outre un connecteur sécurisé, SIC1 ou SIC2, qui défissent une extrémité de connexion des domaines industriels DOM1 et DOM, et entre lesquels une interface peut être établie. En particulier, cette interface peut être un canal de communication sécurisé créé selon le procédé décrit dans les présentes.

Le site d'exploitation OT1 de DOM1 comprend en outre deux lignes de production parallèles CA11 et CA12, chacune de ces lignes de production permettant le contrôle de systèmes cyber-physiques de même type. Il s'agit par exemple ici d'une part du système cyber-physique CPS1_1 contrôlé par la ligne de production CA11 et d'autre part le système cyber-physique CPS1_2 contrôlé par la ligne de production CA12.

Le site d'exploitation OT2 de DOM2 comprend ici une seule ligne de production CA21 permettant le contrôle d'un autre système cyber-physique CPS2_1 , de même type que les systèmes cyber-physiques CPS1_1 et CPS1_2.

Cette configuration de sites d'exploitation peut être généralisée à d'autres variantes de lignes de production se répartissant dans les sites OT1 et OT2, par exemple deux lignes de production dans OT1 et deux lignes de production dans OT2, etc.

Dans l'exemple ici présenté, chacune des lignes de production CA11, CA12 et CA21 comprend un contrôleur C, aussi appelé contrôleur-maître, et une pluralité de capteurs A, aussi appelés capteurs-actuateurs. Au moins l'un de la pluralité de capteurs A est connecté au système cyber-physique CPS1_1 et au système cyber-physique CPS1_2. Une commande d'une action de l'un des systèmes cyber-physiques correspondant à une ligne de production donnée se fait typiquement au moyen d'une interface C2D (ou « Controller to Device », en anglais) associée, et configurée pour interfacer le contrôleur C avec les capteurs A de ladite ligne de production.

Des systèmes cyber-physiques de même type nécessitent l'emploi d'un logiciel ou d'une application de service, ce logiciel ou cette application de service pouvant être fournie par différentes sources. Dans le cas présent, l'application de service est fournie par l'espace industriel de données IDS, et peut être accédée ou utilisée par différents donneurs d'ordre, ici deux donneurs d'ordre distincts, l'un correspondant au premier domaine industriel DOM1 et l'autre correspondant au deuxième domaine industriel DOM2. Le donneur d'ordre correspondant au deuxième domaine industriel DOM2 peut toutefois ne pas être autorisé à utiliser cette application de service tandis que le donneur d'ordre correspondant au premier domaine industriel DOM1 peut l'être. Il convient alors ici de permettre au deuxième domaine DOM2 d'exécuter des tâches au moyen de systèmes cyber-physiques en lui fournissant une licence autorisant la location ou l'utilisation de ces systèmes cyber-physiques.

Comme détaillé ci-après, le procédé de gestion selon l'un quelconque des modes de réalisation et exemples décrits dans les présentes prévoit la mise en oeuvre d'un déploiement, depuis le premier domaine industriel DOM1, dans le deuxième domaine industriel DOM2, et par l'intermédiaire d'un canal sécurisé de communication établi entre les connecteurs sécurisés SIC1 et SIC2, d'un gestionnaire local virtuel de licences LVLM2.

De préférence, ce gestionnaire local virtuel de licences LVLM2 est déployé dans le module de commutation SWTCH2 du deuxième domaine industriel DOM2.

En particulier, et comme illustré, ce déploiement suit le téléchargement, dans le gestionnaire MAN2, d'une machine virtuelle dédiée VILM2. Ce téléchargement est ici réalisé depuis le premier domaine industriel DOM1, par exemple à partir d'une première machine virtuelle VILM1 préalablement déployée dans le gestionnaire MAN1 du premier domaine industriel DOM1.

Ceci permet de minimiser les surplus de trafic et les temps de latence induits par la gestion des droits, cette gestion des droits ayant par exemple été nécessitée par le déploiement de la machine virtuelle VILM1 dans le premier domaine DOM1.

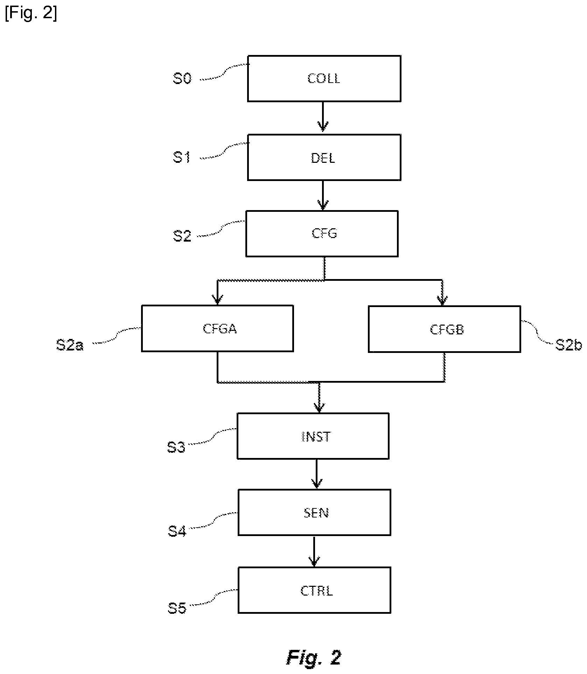

Il est maintenant fait référence à la figure 2, qui illustre, sous forme d'organigramme, un exemple d'étapes S0, S1, S2, S2a, S2b, S3, S4 et S5 d'un procédé de gestion de licences d'une application de service.

Ces étapes prévoient la mise en oeuvre d'une gestion collaborative de licences entre deux domaines industriels DOM1 et DOM2, en fonction de la sélection d'une politique de délégation de cette application de service.

Une étape préliminaire S0 optionnelle comprend l'établissement d'un accord de collaboration entre les deux domaines industriels DOM1 et DOM2.

Par exemple, l'étape préliminaire S0 comprend une sous-étape d'identification de systèmes cyber-physiques présents dans un domaine industriel, une sous-étape de localisation de modules dans ce modules industriel, ou une sous-étape d'identification de licences ou de contraintes de gestion des licences d'applications de service associées à ces systèmes cyber-physiques. L'étape préliminaire S0 peut aussi mettre en oeuvre une récolte de données issues du premier domaine industriel DOM1, à partir de l'espace industriel de données ou d'un serveur de données industrielles IDS.

En outre, l'étape préliminaire S0 peut aussi comprendre une sous-étape de localisation d'une application de service ou d'une copie de celle-ci. Notamment, l'espace industriel de données IDS peut indiquer au domaine industriel DOM1 la localisation d'une application de service compatible pour exécuter une commande avec un système cyber-physique particulier, ou encore une adresse à laquelle cette application est localisée, par exemple une adresse MAC ou IP.

En outre, l'étape préliminaire S0 peut aussi comprendre une sous-étape de fourniture d'une application de service au domaine industriel DOM1. Notamment, il peut s'agir d'un téléchargement ou d'une installation de certaines parties de l'application de service depuis IDS vers DOM1, et éventuellement, vers DOM2 via une interface déjà établie entre DOM1 et DOM2. La copie, le téléchargement ou l'installation de parties de l'application de service peut en outre être conditionnée à une autorisation fournie par IDS.

En outre, l'étape préliminaire S0 peut aussi comprendre une sous-étape de vérification de l'infrastructure du premier domaine industriel DOM1, qui lui-même peut vérifier l'infrastructure du deuxième domaine industriel DOM2 lorsque DOM1 et DOM2 sont connectés entre eux au moyen d'une interface. Si l'une de ces infrastructures n'est pas conforme à des conditions prédéterminées, les étapes suivantes peuvent ne pas être mises en oeuvre.

L'étape S1 concerne une sélection d'une politique de délégation de l'application de service au deuxième domaine industriel DOM2.

Lors de cette étape S1, le premier domaine industriel DOM1 indique au deuxième domaine industriel DOM2 quelle méthode de délégation appliquer, par exemple en fonction de règles de gouvernance en vigueur ou en vue d'accéder à ou d'utiliser un système cyber-physique.

Typiquement, des politiques de gouvernance sont associées à chaque domaine industriel, celles-ci dépendant par exemple de règles de l'industrie 4.0, de règles conformes au règlement général sur la protection des données, de la zone géographique ou du pays où se situe le domaine industriel, du ou des propriétaires des données utilisées par les domaines industriels, des types de systèmes cyber-physiques que comprennent ces domaines industriels, des types de fonctions virtuelles utilisées par ceux-ci, de leurs fournisseurs, etc.

L'étape S1 peut comprendre en outre une sous-étape de vérification de la capacité ou de la conformité de l'infrastructure du deuxième domaine industriel DOM2 pour mettre en oeuvre la délégation et, ultérieurement, accéder à ou utiliser un système cyber-physique du premier domaine industriel DOM1.

L'étape S2 concerne une configuration d'un canal de communication sécurisé entre le premier domaine industriel DOM1 et le deuxième domaine industriel DOM2, et en particulier, entre un premier connecteur sécurisé SIC1 de DOM1 et un deuxième connecteur sécurisé SIC2 de DOM2. L'étape S2 comprend la création dudit canal de communication sécurisé si celui-ci n'est pas préalablement établi.

La création et/ou la configuration d'un tel canal de communication sécurisé comprend une mise en place des connecteurs sécurisés SIC1 et SIC2. Une telle mise en place peut suivre une vérification de la capacité ou de la conformité de l'infrastructure du premier domaine industriel DOM1 et/ou du deuxième domaine industriel DOM2.

La configuration que comprend l'étape S2 est mise en oeuvre de sorte à fournir un canal de communication approprié pour la gestion et le partage de licences entre DOM1 et DOM2.

Ceci permet par exemple de déterminer le débit, la latence et/ou le niveau de sécurité des connecteurs sécurisés SIC1 et SIC2 de manière à adapter ceux-ci au téléchargement, dans DOM2, d'une machine virtuelle dédiée VILM2, ou en variante d'un conteneur dédié, et ce depuis le premier domaine industriel DOM1, ou indirectement, depuis l'espace industriel de données ou un serveur de données industrielles IDS.

La configuration des connecteurs sécurisés SIC1 et SIC2 comprend en outre l'attribution de paramètres de collaboration. Par exemple, le connecteur sécurisé SIC1 reçoit un ou plusieurs paramètres définissant la politique de délégation sélectionnée lors de l'étape S1, et/ou des fonctions activables utiles à une communication ou une collaboration du premier domaine industriel DOM1 avec le deuxième domaine industriel DOM2.

Selon une première variante possible de l'étape S2, appelée étape S2a, le canal de communication sécurisé est établi entre les domaines DOM1 et DOM2 au moyen de connecteurs sécurisés SIC1 et SIC2, qui sont configurés de manière identique.

Par exemple, les deux connecteurs sécurisés SIC1 et SIC2 sont déployés simultanément et/ou depuis une même source. En cas de mise à jour, les deux connecteurs sécurisés SIC1 et SIC2 sont configurés de manière identique depuis le module de gestion MAN1 du premier domaine industriel DOM1.

Selon une deuxième variante possible de l'étape S2, appelée étape S2b, le premier connecteur sécurisé SIC1 est déployé préalablement au deuxième connecteur sécurisé SIC2. Un canal de communication sécurisé est ensuite établi depuis le premier domaine industriel DOM1 vers le deuxième domaine industriel DOM2, et le deuxième connecteur sécurisé SIC2 servant d'extrémité au canal de communication dans DOM2 est ensuite mis à jour par le premier connecteur sécurisé SIC1. Cette mise à jour de SIC2 comprend par exemple une fourniture de paramètres de la délégation, d'identifiants sécurisés ou encore de fonctions activables dans le deuxième domaine industriel DOM2.

En particulier, et si celui-ci n'est pas présent initialement, le deuxième connecteur sécurisé SIC2 est déployé dans le deuxième domaine industriel DOM2 depuis le premier connecteur sécurisé SIC1, et configuré de sorte à permettre une transmission de données entre les deux domaines industriels DOM1 et DOM2.

L'étape S3 concerne un déploiement, dans le deuxième domaine industriel DOM2, d'un gestionnaire local virtuel de licences LVLM2 au moyen du canal de communication sécurisé configuré précédemment.

En particulier, l'étape S3 comprend un téléchargement d'une machine virtuelle dédiée VILM2, ou en variante, d'un conteneur dédié, par le biais du canal de communication sécurisé et créé entre SIC1 et SIC2 lors de l'étape précédente. De préférence, ce téléchargement est effectué dans le module de gestion MAN2 du deuxième domaine industriel DOM2.

En outre, le téléchargement de l'étape S3 est suivi d'une instanciation, depuis la machine virtuelle téléchargée ou le conteneur téléchargé, du gestionnaire local virtuel de licences LVLM2 dans le deuxième domaine industriel DOM2.

Selon différentes variantes, cette instanciation peut être effectuée en installant d'abord un système d'exploitation et/ou la machine virtuelle VILM2 depuis le premier domaine industriel DOM1. La machine virtuelle VILM2 peut ensuite être exécutée sur le deuxième domaine industriel DOM2 afin d'instancier le gestionnaire local virtuel de licences LVLM2, de préférence dans le module de commutation SWTCH2 de DOM2.

En outre, l'étape S3 peut comprendre une vérification de la machine virtuelle téléchargée avant de mettre en oeuvre l'instanciation du gestionnaire local virtuel de licences LVLM2. Plusieurs instances de gestionnaires locaux virtuels de licences peuvent aussi être déployées en répétant l'opération, auquel cas chaque instance est, de préférence, distinguée au moyen d'un identifiant unique, par exemple un nombre généré lors de chaque instanciation.

L'étape S3 comprend ainsi la création, dans le deuxième domaine industriel DOM2, d'au moins une instance de gestionnaire local virtuel de licences LVLM2.

Optionnellement, cette instanciation est conditionnée par le premier domaine industriel DOM1 ou par l'espace industriel de données IDS, par exemple en fonction d'un accord d'instanciation du gestionnaire local virtuel de licences LVLM2 dans DOM2 lorsque le canal de communication inter-domaines entre SIC1 et SIC2 présente une conformité adaptée à la gestion de licences.

Optionnellement, la configuration de l'étape S2 et/ou le déploiement de l'étape S3 est arrêtée en cas d'interruption de la délégation, cet arrêt pouvant comporter une fermeture du canal de communication sécurisé entre les connecteurs sécurisés SIC1 et SIC2, si le canal de communication sécurisé est déjà établi.

Dans ce cas, lors d'une interruption de la configuration et/ou du déploiement, l'instance du gestionnaire local virtuel de licences LVLM2 peut aussi se verrouiller, par exemple par suppression de clés associées, ces clés étant nécessaires pour accéder à ou utiliser le gestionnaire local virtuel de licences LVLM2, se désinstaller ou s'autodétruire si celle-ci a déjà été déployée.

Selon différents exemples, la machine virtuelle ou le conteneur peut également se verrouiller, se désinstaller ou s'autodétruire. Avantageusement, ceci permet d'éviter toute copie de la machine virtuelle ou du conteneur. Par exemple, la distinction de différentes instances au moyen d'identifiants peut être utilisée pour détecter toute tentative de duplication, et ainsi contrôler le nombre d'instances au moyen du gestionnaire local virtuel de licences.

L'étape S4 concerne la transmission d'une licence depuis le premier domaine DOM1 au gestionnaire local virtuel de licences déployé, LVLM2. La transmission de licences entre domaines industriels est prévue pour autoriser l'accès à ou l'utilisation d'applications de service par le deuxième domaine industriel DOM2.

Selon différentes variantes, une licence peut être transmise séparément au premier connecteur sécurisé SIC1 et au deuxième connecteur sécurisé SIC2, ou encore aux deux connecteurs sécurisés SIC1 et SIC2. Seulement certaines licences peuvent être fournies à l'un ou l'autre connecteur sécurisé, par exemple pour établir une communication spécifique entre DOM1 et DOM2 pour certains types d'applications de service, et pour lesquels chacun des deux connecteurs sécurisés SIC1 et SIC2 doivent disposer de licences correspondantes.

L'étape S5 concerne une commande d'un système cyber-physique, et en particulier, l'exécution d'une commande d'un système cyber-physique que comprend le premier domaine industriel DOM1, depuis le deuxième domaine industriel DOM2.

Par exemple, une commande du système cyber-physique CPS1_1 ou CPS1_2 peut être mise en oeuvre au moyen de l'application de service dont la licence a été transmise au deuxième domaine industriel DOM2 lors de l'étape S4, suite au déploiement du gestionnaire local virtuel de licences LVLM2 lors de l'étape S3, ce déploiement ayant été effectué via le canal de communication sécurisé configuré lors de l'étape S2, sur la base de la politique de délégation sélectionnée au cours de l'étape S1.

De préférence, les flux de commande du système cyber-physique transitent entre le deuxième domaine industriel DOM2 et le premier domaine industriel DOM1 en passant par le canal de communication sécurisé configuré entre SIC1 et SIC2. Ceci permet notamment d'effectuer un contrôle des flux de commande par les connecteurs sécurisés SIC1 et SIC2.

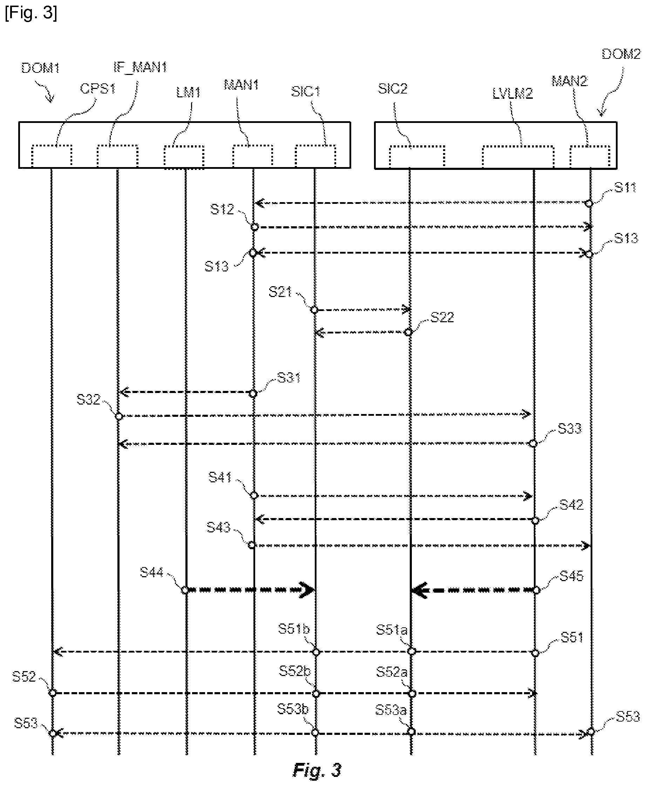

Il est maintenant fait référence à la figure 3, qui détaille sous forme de diagramme de flux des sous-étapes du procédé de gestion de licences.

En particulier, le diagramme de flux représenté illustre un exemple de procédé de gestion comprenant des sous-étapes S11 à S53b, au cours desquelles des flux sont échangés entre les entités du premier domaine industriel DOM1 et les entités du deuxième domaine industriel DOM2. Les flux échangés peuvent être des flux de données, des flux d'applications et/ou des flux de commande.

En lien avec les étapes décrites précédemment, l'étape S1 de sélection comprend les sous-étapes S11 à S14, les étapes S2, S2a et/ou S2b de configuration comprennent les sous-étapes S21 à S22, l'étape S3 de déploiement comprend les sous-étapes S31 à S33, l'étape S4 de transmission comprend les sous-étapes S41 à S43 et, optionnellement, la sous-étape S44 et/ou la sous-étape S45, et l'étape S5 d'exécution de commande de système cyber-physique comprend les sous-étapes S51 à S53b.

Comme illustré, le premier domaine industriel DOM1 comprend ici au moins un système cyber-physique CPS1. Le premier domaine industriel DOM1 comprend en outre le module gestionnaire MAN1 et, une fois créé ou configuré, le connecteur sécurisé SIC1. Le premier domaine industriel DOM1 comprend en outre un gestionnaire d'infrastructure IF_MAN1 et un gestionnaire de licences LM1.

Le deuxième domaine industriel DOM2 comprend un autre module gestionnaire MAN2 et, une fois créé(s) ou instanciés, le connecteur sécurisé SIC2 ainsi que le gestionnaire local virtuel de licences LVLM2.

Lors de la sous-étape S11, une requête de délégation est transmise du module gestionnaire MAN2 de DOM2 au module gestionnaire MAN1 de DOM1.

Sur réception de cette requête, le module gestionnaire MAN1 initie une demande de délégation d'une application de service associée au système cyber-physique, afin de permettre au deuxième domaine DOM2 d'utiliser des fonctions du premier domaine DOM1. Cette demande de délégation peut éventuellement dépendre d'une politique de délégation déjà configurée ou mise en oeuvre au niveau local.

Lors de la sous-étape S12, un message d'acquittement correspondant à la requête de la sous-étape S11 est renvoyé au module gestionnaire MAN2 du deuxième domaine industriel DOM2 pour confirmer qu'une délégation peut être mise en oeuvre, et en particulier, une sélection d'une politique de délégation.

Ce message d'acquittement peut comprendre en outre une requête configurée pour vérifier si l'infrastructure du deuxième domaine industriel DOM2 est compatible avec l'instanciation d'un gestionnaire local virtuel de licences, c'est-à-dire qu'il peut supporter le téléchargement d'une machine virtuelle ou d'un conteneur permettant l'instanciation d'un tel gestionnaire local virtuel de licences, en particulier le gestionnaire local virtuel de licences LVLM2.

Par exemple, si l'infrastructure du deuxième domaine industriel DOM2 ne comporte pas de module de sécurité matériel (ou HSM, pour « Hardware Security Module », en anglais), la mise en oeuvre du téléchargement et/ou de l'instanciation pourra être refusée ultérieurement. Par défaut, on suppose que l'infrastructure du deuxième domaine industriel DOM2 est ici compatible avec les étapes et sous-étapes suivantes, en vue de fournir une signature confirmant la possibilité de créer un canal de communication sécurisé entre DOM2 et DOM1.

Lors de la sous-étape S13, tout autre message peut être transmis entre MAN2 et MAN1, cet autre message comprenant par exemple une signature indiquant que l'infrastructure de DOM1 et/ou de DOM2 est disponible pour ou conforme à la mise en oeuvre de la délégation et/ou de la création d'un canal de communication sécurisé entre les deux domaines. Cet autre message peut aussi déclencher une mise à jour d'une configuration du connecteur sécurisé SIC2 si celui-ci est déjà déployé.

Lors de la sous-étape S21, un canal de communication sécurisé est créé entre les connecteurs sécurisés SIC1 et SIC2.

Optionnellement, la sous-étape S21 comprend une mise à jour de configuration des connecteurs sécurisés et/ou du canal de communication sécurisé si ce dernier est déjà présent. En particulier, une mise à jour du connecteur sécurisé SIC2 peut être mise en oeuvre à partir du connecteur sécurisé SIC1, comme décrit précédemment au regard de la sous-étape S2b.

Optionnellement, cette mise à jour de la configuration des connecteurs sécurisés et/ou du canal de communication sécurisé comprend une activation et/ou une mise à jour de fonctions dédiées et accessibles via SIC2, par exemple des fonctions de gestion des données, de sorte que les deux connecteurs sécurisés SIC1 et SIC2 disposent de mêmes fonctions activées.

Si les règles de gouvernance associées aux domaines DOM1 et DOM2 permettent l'échange de données, de logiciels ou de fonctions sensibles, il est important que le canal de communication établi entre les deux dispose d'un niveau de sécurité suffisamment élevé pour cet échange. Ainsi, la mise à jour de la configuration des connecteurs sécurisés peut comporter une interdiction d'hébergement de fonctions sensibles dans le deuxième domaine industriel DOM2 si le niveau de sécurisation de son infrastructure est considéré insuffisant par rapport à celui du premier domaine industriel DOM1, ou une autorisation d'hébergement de ces fonctions sensibles si ce niveau de sécurisation est suffisant.

Optionnellement, lors de la sous-étape S22, un message d'acquittement est transmis du connecteur sécurisé SIC2 au connecteur sécurisé SIC1, ce message d'acquittement confirmant par exemple la fin de la création ou de la configuration du canal de communication sécurisé entre les deux ou la fin de la mise à jour de la configuration de SIC2.

Lors de la sous-étape S31, et sur réception du message d'acquittement correspondant à la sous-étape S13 ou S22, le module gestionnaire MAN1 transmet un autre message d'acquittement au gestionnaire d'infrastructure IF_MAN1 du premier domaine DOM1. Cet autre message d'acquittement permet d'indiquer que le canal de communication sécurisé est bien établi, et d'informer d'une demande d'instanciation du gestionnaire de licence vers le deuxième domaine DOM2.

Lors de la sous-étape S32, éventuellement déclenchée par la sous-étape S31, le premier domaine industriel DOM1 met en oeuvre le déploiement du gestionnaire local virtuel de licences LVLM2 dans le deuxième domaine industriel DOM2. En particulier, la sous-étape S32 comprend un téléchargement, depuis le gestionnaire d'infrastructure IF_MAN1 de DOM1, d'une machine virtuelle VILM2 (ou d'un conteneur) dans le module gestionnaire MAN2 de DOM2 et une instanciation, depuis cette machine virtuelle VILM2 (ou de ce conteneur), du gestionnaire local virtuel de licences LVLM2, qui est ici de préférence une fonction virtuelle VNF adaptée à la gestion de licences de l'application de service.

L'installation d'un système d'exploitation correspondant dans le deuxième domaine industriel DOM2 peut aussi être effectuée afin de mettre en oeuvre l'instanciation de VILM2. Une telle installation n'est ici pas nécessaire, ce qui fournit un procédé avantageusement plus rapide à mettre en oeuvre puisque le premier domaine industriel DOM1 dispose généralement déjà des machines virtuelles et/ou conteneurs destinés à être téléchargés puis exécutés dans le deuxième domaine industriel DOM2.

Optionnellement, lors de la sous-étape S33, et lorsque le gestionnaire local virtuel de licences LVLM2 a été déployé dans le deuxième domaine industriel, un message d'acquittement correspondant est transmis du gestionnaire local virtuel de licences LVLM2 de DOM2 au gestionnaire d'infrastructure IF_MAN1 de DOM1.

De préférence, suite à son instanciation dans le deuxième domaine industriel DOM2, le gestionnaire local virtuel de licences LVLM2 s'abonne au gestionnaire de licences LM1 présent dans DOM1. Le LM1 est configuré pour mettre à jour régulièrement les licences de l'application de service à partir d'informations qui lui sont fournies, et en particulier, depuis l'espace industriel de données IDS. Un abonnement de LVLM2 au gestionnaire de licences LM1 signifie que ce dernier peut lui fournir, à tout moment, les mises à jour de ces licences.

Par exemple, dans le cas où il est souhaité de désactiver le gestionnaire local virtuel de licences LVLM2, le gestionnaire de licences LM1 peut émettre une requête à cet effet et à son intention. Sur la base de l'émission de requêtes depuis le gestionnaire de licences LM1 vers le gestionnaire local virtuel de licences LVLM2, on peut aussi mettre à fin à ou renouveler une licence à durée limitée, par exemple via la fourniture de clés ou de certificats correspondants. La possibilité d'effectuer de telles modifications dans la gestion des licences peut ainsi être mise en oeuvre au moyen d'une requête d'abonnement (non représentée), pour autant que le gestionnaire de licences LM1 soit connecté au gestionnaire local virtuel de licences LVLM2.

Lors de la sous-étape S41, éventuellement déclenchée par la sous-étape S33, au moins une licence de l'application de service est transmise du module gestionnaire MAN1 au gestionnaire local virtuel de licences LVLM2 de DOM2, ladite au moins une licence étant nécessaire pour chaque application de service qu'on souhaite utiliser.

Optionnellement, lors de la sous-étape S42, un message d'acquittement correspondant est transmis du gestionnaire local virtuel de licences LVLM2 de DOM2 au module gestionnaire MAN1, informant ce dernier de la bonne réception de la licence.

Optionnellement, lors de la sous-étape S43, un message de confirmation peut optionnellement être renvoyé depuis le module gestionnaire MAN1 de DOM1 vers le module gestionnaire MAN2 de DOM2, ce message de confirmation permettant d'informer le deuxième domaine industriel DOM2 que le gestionnaire de licences LM1 est prêt pour mettre en oeuvre des actions ultérieures.

Avantageusement, les sous-étapes S41, S42 et/ou S43 permettent aussi d'effectuer un éventuel comptage du nombre de transmissions effectuées de licences.

Dans les présentes, il est possible que le gestionnaire local virtuel de licences LVLM2 ne puisse pas être déployé dans le deuxième domaine industriel DOM2, par exemple parce que DOM2 ne dispose pas des ressources nécessaires à ce déploiement. Cependant, en variante, les relations inter domaines rendues possibles grâce au canal de communication sécurisé entre les connecteurs sécurisés SIC1 et SIC2 peuvent suffire à la gestion de licences, pour autant que SIC1 et SIC2 soient configurés à cet effet, par exemple en termes de capacité, de latence et de niveau de sécurité.

Lors des sous-étapes S51 et S52, une paire requête-réponse est échangée entre le gestionnaire local virtuel de licences LVLM2 du deuxième domaine industriel DOM2 et le premier domaine industriel DOM1 afin d'obtenir une licence permettant l'exécution d'une commande du système cyber-physique CPS1 au moyen d'une application de service spécifique à l'accès à ou à l'utilisation de ce dernier. Cette licence peut être fournie par le premier domaine industriel DOM1, voire par l'un des connecteurs sécurisés SIC1 et/ou SIC2 si l'une ou l'autre des sous-étapes S41 et S42 a été mise en oeuvre.

Par exemple, une requête demandant la fourniture de cette licence est émise depuis LVLM2 vers le système cyber-physique CPS1 par l'intermédiaire du canal de communication sécurisé au cours de la sous-étape S52. En particulier, cette requête transite par le canal de communication établi et configuré entre les deux connecteurs sécurisés SIC1 et SIC2. Optionnellement, cette requête peut comprendre une demande d'information du type de licence ou d'application de service nécessaire pour exécuter une commande de CPS1.

Optionnellement, lors de la sous-étape S51a, une vérification de la politique de délégation, ou de paramètres qui ont précédemment fournis au deuxième domaine industriel DOM2, est mise en oeuvre au niveau du deuxième connecteur sécurisé SIC2. En variante, ou de manière complémentaire, une vérification similaire peut être mise en oeuvre au niveau du premier connecteur sécurisé SIC1 lors de la sous-étape S51b.

Au cours de la sous-étape S52, une réponse à la requête de la précédente sous-étape S51 est émise depuis le système cyber-physique CPS1 vers le gestionnaire local virtuel de licences LVLM2 du deuxième domaine industriel DOM2. En particulier, cette réponse transite par le canal de communication sécurisé et comprend la licence autorisant le deuxième domaine industriel DOM2 à accéder et à utiliser l'application de service pour exécuter la commande du système cyber-physique CPS1.

Dans les présentes, le système cyber-physique CPS1 connaît a priori l'application de service qu'il nécessite pour effectuer une tâche.

Optionnellement, lors de la sous-étape S52b, une vérification de la licence ou de paramètres qui ont précédemment fournis au deuxième domaine industriel DOM2 est mise en oeuvre au niveau du premier connecteur sécurisé SIC1. En variante, ou de manière complémentaire, une vérification similaire peut être mise en oeuvre au niveau du deuxième connecteur sécurisé SIC2 lors de la sous-étape S52a. Une vérification de la politique de délégation de l'application de service peut aussi être effectuée lors d'au moins l'une des sous-étapes S52a et S52b.

Optionnellement, lors de la sous-étape S53, un message d'acquittement et/ou une paire requête-réponse de commande est transmis entre les deux domaines industriels DOM1 et DOM2 et, en particulier, entre le système cyber-physique CPS1 de DOM1 et le module gestionnaire MAN2 de DOM2.

Le message d'acquittement de la sous-étape S53 permet de confirmer que le deuxième domaine industriel DOM2 dispose bien de la licence de l'application de service et/ou que le système cyber-physique CPS1 de DOM1 est disponible pour l'exécution d'une commande à distance. Le message d'acquittement peut en outre indiquer la bonne mise en oeuvre des sous-étapes précédentes.

La paire requête-réponse de commande de la sous-étape S53 permet de mettre en oeuvre une commande du système cyber-physique, et de confirmer que celle-ci a bien été exécutée. Par exemple, la requête de la paire requête-réponse peut préciser l'utilisation d'une application de service spécifique à CPS1 et/ou lui transmettre une commande à exécuter. La réponse de la paire requête-réponse peut confirmer la bonne réception de la requête ou la bonne exécution de la commande.

Optionnellement, lors de la sous-étape S53b, une vérification supplémentaire des données ou des flux de commande transmis au moyen du message d'acquittement et/ou de la paire requête-réponse de commande est mise en oeuvre au niveau du premier connecteur sécurisé SIC1. Une vérification similaire peut être mise en oeuvre lors de la sous-étape S53a au niveau du deuxième connecteur sécurisé SIC2. En particulier, la licence transmise et/ou la politique de délégation de l'application de service font partie des données pouvant être vérifiées.

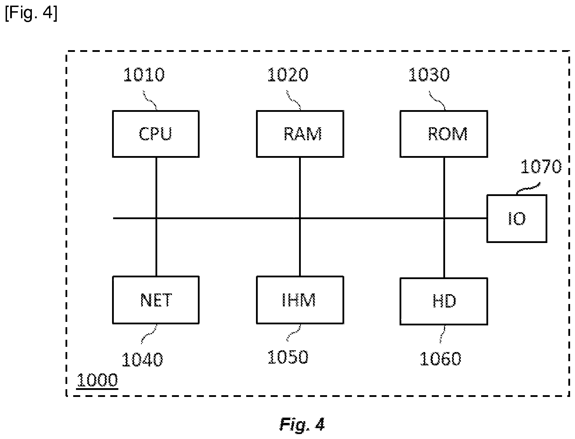

La figure 4 représente un bloc-diagramme schématique d'un circuit de traitement informatique selon un exemple de mise en oeuvre des réalisations décrites.

Selon un exemple, ledit circuit de traitement informatique est un processeur. De préférence, un tel circuit de traitement informatique est un système sur puce 1000 agencé pour mettre en oeuvre un procédé de commande d'un réseau informatique de périphérie.

En particulier, ce circuit de traitement informatique peut correspondre à un élément matériel définissant ou compris dans un serveur de données industrielles IDS ou dans l'un des domaines industriels DOM1 et DOM2. Lorsque ces domaines industriels sont des réseaux informatiques de périphérie à accès multiple, ces éléments matériels sont de préférence des modules plateforme ou des modules gestionnaires de ces réseaux.

De manière non limitative, le système sur puce 1000 comporte un bus de communication connecté, par exemple, à une unité centrale de traitement 1010, tel qu'un processeur ou un microprocesseur, et notée CPU.

Le système sur puce 1000 comporte en outre une mémoire à accès aléatoire 1020, notée RAM, apte à mémoriser le code exécutable du procédé de commande ainsi que les registres adaptés à enregistrer des variables et des paramètres nécessaires pour la mise en oeuvre du procédé selon des modes de réalisation, la capacité de mémoire de celui-ci peut être complétée par une mémoire RAM optionnelle connectée à un port d'extension, par exemple.

En outre, le système sur puce 1000 comporte une mémoire morte 1030, notée ROM, pour stocker des programmes informatiques pour la mise en oeuvre des réalisations décrites précédemment, ainsi qu'une interface réseau 1040 qui est normalement connectée à un réseau de communication sur lequel des données numériques à traiter sont transmises ou reçues.

L'interface réseau 1040 peut être une seule interface réseau, ou composée d'un ensemble d'interfaces réseau différentes (par exemple filaire et sans fil, interfaces ou différents types d'interfaces filaires ou sans fil).

Des paquets de données sont envoyés sur l'interface réseau pour la transmission ou sont lues à partir de l'interface de réseau pour la réception sous le contrôle de l'application logiciel exécuté dans le processeur ou le microprocesseur 1010.

Par ailleurs, le système sur puce 1000 comporte une interface utilisateur 1050 pour recevoir des entrées d'un utilisateur ou pour afficher des informations à un utilisateur, un support de stockage optionnel 1060 noté HD, et un module d'entrée-sortie 1070, noté IO, pour la réception, l'envoi de données depuis ou vers des périphériques externes tels que disque dur, support de stockage amovible ou autres.

Dans un exemple présenté ici, le code exécutable peut être stocké dans une mémoire morte 1030, sur le support de stockage 1060 ou sur un support amovible numérique tel que par exemple un disque.

Selon une variante, le code exécutable des programmes peuvent être reçu au moyen d'un réseau de communication, via l'interface réseau 1040, afin d'être stocké dans le support de stockage 1060, avant d'être exécuté.

L'unité centrale de traitement 1010 est adaptée pour commander et diriger l'exécution des instructions ou des portions de code logiciel du programme ou des programmes selon l'un des modes de réalisation, instructions qui sont stockées dans l'un des moyens de stockage précités. Après la mise sous tension, le CPU 1010 est capable d'exécuter des instructions stockées dans la mémoire RAM principale 1020, relatives à une application logicielle, après que ces instructions aient été chargées de la ROM par exemple.

Dans l'exemple présenté ici, le système sur puce 1000 est un appareil programmable qui utilise un logiciel. Toutefois, à titre subsidiaire, la présente description peut être mise en oeuvre dans n'importe quel type de matériel (par exemple, sous la forme d'un circuit intégré spécifique ou ASIC).

## Revendications

1. Procédé de gestion de licences d'une application de service entre une pluralité de domaines industriels (DOM1, DOM2) connectés entre eux, le procédé comprenant les étapes:
- sélectionner (S1), avec un premier domaine industriel (DOM1) de la pluralité de domaines industriels, une politique de délégation de l'application de service à un deuxième domaine industriel (DOM2) de la pluralité de domaines industriels ;
- déployer (S3), depuis le premier domaine industriel, dans le deuxième domaine industriel, un gestionnaire local virtuel de licences (LVLM2) ; et
- transmettre (S4), depuis le premier domaine industriel, une licence de l'application de service audit gestionnaire local virtuel de licences, la licence autorisant l'utilisation de l'application de service par le deuxième domaine industriel ;
**caractérisé en ce que** le déploiement du gestionnaire local virtuel de licences est mis en oeuvre par l'intermédiaire d'un canal sécurisé de communication, le procédé comprenant en outre configurer (S2), en fonction de la politique de délégation sélectionnée, ledit canal sécurisé de communication étant établi entre un premier connecteur sécurisé (SIC1) du premier domaine industriel et un deuxième connecteur sécurisé (SIC2) du deuxième domaine industriel.

2. Procédé selon la revendication 1, dans lequel la transmission de la licence de l'application de service au gestionnaire local virtuel de licences comprend une fourniture de la licence au premier connecteur sécurisé et/ou au deuxième connecteur sécurisé.

3. Procédé selon la revendication 1 ou 2, dans lequel la configuration du canal sécurisé de communication comprend une mise à jour du deuxième connecteur sécurisé par rapport au premier connecteur sécurisé.

4. Procédé selon l'une quelconque des revendications précédentes, dans lequel l'application de service est configurée pour commander un système cyber-physique (CPS1) du premier domaine industriel, le procédé comprenant en outre, sur réception de la licence par le gestionnaire local virtuel de licences, exécuter (S5) une commande du système cyber-physique au moyen de l'application de service.

5. Procédé selon la revendication 4, dans lequel l'exécution de la commande du système cyber-physique est mise en oeuvre sur échange (S51, S52, S53), entre le premier domaine industriel et le gestionnaire local virtuel de licences du deuxième domaine industriel, d'une paire requête-réponse de la licence.

6. Procédé selon la revendication 5, dans lequel l'échange de la paire requête-réponse de la licence comprend une vérification (S51a ; S51b ; S52a ; S52b ; S53a ; S53b) de la licence transmise et/ou de la politique de délégation de l'application de service, la vérification étant mise en oeuvre par l'un au moins parmi le premier connecteur sécurisé et le deuxième connecteur sécurisé.

7. Procédé selon l'une quelconque des revendications précédentes, dans lequel le déploiement du gestionnaire local virtuel de licences comprend un téléchargement (S32) préalable d'une machine virtuelle (VILM2) dans le deuxième domaine industriel depuis le premier domaine industriel, le gestionnaire local virtuel de licences étant déployé par ladite machine virtuelle.

8. Procédé selon la revendication 7, comprenant en outre un verrouillage, une désinstallation ou une destruction de la machine virtuelle.

9. Procédé selon l'une quelconque des revendications précédentes, dans lequel le procédé comprend en outre un comptage:
- d'un nombre de gestionnaires locaux virtuels de licences déployés depuis le premier domaine industriel, dans le deuxième domaine industriel ; et/ou
- d'un nombre de licences de l'application de service transmises, depuis le premier domaine industriel, au gestionnaire local virtuel de licences.

10. Procédé selon l'une quelconque des revendications précédentes, dans lequel le premier et le deuxième domaine industriel sont chacun un réseau informatique de périphérie à accès multiples.

11. Serveur de données industrielles (IDS) pour contrôler des licences d'une application de service gérées entre une pluralité de domaines industriels (DOM1, DOM2) connectés entre eux, ledit serveur étant agencé pour être connecté à un domaine industriel de ladite pluralité de domaines industriels et configuré pour mettre en oeuvre des étapes du procédé selon l'une quelconque des revendications précédentes.

12. Programme informatique comportant des instructions pour la mise en oeuvre du procédé selon l'une des revendications 1 à 10, lorsque lesdites instructions sont exécutées par un processeur d'un circuit de traitement informatique.

13. Support de stockage d'informations, amovible ou non, partiellement ou totalement lisible par un ordinateur ou un processeur comportant des instructions de code d'un programme d'ordinateur pour l'exécution de chacune des étapes du procédé selon l'une quelconque des revendications 1 à 10.

## Patentansprüche

1. Verfahren zur Verwaltung von Lizenzen einer Dienstanwendung über eine Vielzahl von industriellen Sektoren (DOM1, DOM2), die untereinander verbunden sind, hinweg, wobei das Verfahren die folgenden Schritte beinhaltet:
- Auswählen (S1), mit einem ersten industriellen Sektor (DOM1) der Vielzahl von industriellen Sektoren, einer Politik zum Delegieren der Dienstanwendung an einen zweiten industriellen Sektor (DOM2) der Vielzahl von industriellen Sektoren;
- Bereitstellen (S3), von dem ersten industriellen Sektor aus, in dem zweiten industriellen Sektor, eines virtuellen lokalen Lizenzmanagers (LVLM2); und
- Übertragen (S4), von dem ersten industriellen Sektor aus, einer Lizenz der Dienstanwendung an den virtuellen lokalen Lizenzmanager, wobei die Lizenz die Verwendung der Dienstanwendung durch den zweiten industriellen Sektor autorisiert;
**dadurch gekennzeichnet, dass** die Bereitstellung des virtuellen lokalen Lizenzmanagers über einen gesicherten Kommunikationskanal implementiert wird, wobei das Verfahren ferner das Konfigurieren (S2), in Abhängigkeit von der ausgewählten Delegierungspolitik, des gesicherten Kommunikationskanals beinhaltet, der zwischen einer ersten gesicherten Verbindungseinheit (SIC1) des ersten industriellen Sektors und einer zweiten gesicherten Verbindungseinheit (SIC2) des zweiten industriellen Sektors hergestellt wird.

2. Verfahren nach Anspruch 1, wobei die Übertragung der Lizenz der Dienstanwendung an den virtuellen lokalen Lizenzmanager eine Lieferung der Lizenz an die erste gesicherte Verbindungseinheit und/oder an die zweite gesicherte Verbindungseinheit beinhaltet.

3. Verfahren nach Anspruch 1 oder 2, wobei die Konfiguration des gesicherten Kommunikationskanals eine Aktualisierung der zweiten gesicherten Verbindungseinheit mit Bezug auf die erste gesicherte Verbindungseinheit beinhaltet.

4. Verfahren nach einem beliebigen der vorhergehenden Ansprüche, wobei die Dienstanwendung dazu konfiguriert ist, ein cyber-physisches System (CPS1) des ersten industriellen Sektors zu steuern, wobei das Verfahren ferner nach Empfang der Lizenz durch den virtuellen lokalen Lizenzmanager das Ausführen (S5) eines Befehls des cyber-physischen Systems mit Hilfe der Dienstanwendung beinhaltet.

5. Verfahren nach Anspruch 4, wobei die Ausführung des Befehls des cyber-physischen Systems nach Austausch (S51, S52, S53), zwischen dem ersten industriellen Sektor und dem virtuellen lokalen Lizenzmanager des zweiten industriellen Sektors, eines Anfrage-Antwort-Paares der Lizenz implementiert wird.

6. Verfahren nach Anspruch 5, wobei der Austausch des Anfrage-Antwort-Paares der Lizenz eine Überprüfung (S51a; S51b; S52a; S52b; S53a; S53b) der übertragenen Lizenz und/oder der Delegierungspolitik der Dienstanwendung beinhaltet, wobei die Überprüfung durch mindestens eine von der ersten gesicherten Verbindungseinheit und der zweiten gesicherten Verbindungseinheit implementiert wird.

7. Verfahren nach einem beliebigen der vorhergehenden Ansprüche, wobei die Bereitstellung des virtuellen lokalen Lizenzmanagers ein vorheriges Herunterladen (S32) einer virtuellen Maschine (VILM2) in den zweiten industriellen Sektor von dem ersten industriellen Sektor aus beinhaltet, wobei der virtuelle lokale Lizenzmanager durch die virtuelle Maschine bereitgestellt wird.

8. Verfahren nach Anspruch 7, das ferner eine Sperrung, eine Deinstallation oder ein Löschen der virtuellen Maschine beinhaltet.

9. Verfahren nach einem beliebigen der vorhergehenden Ansprüche, wobei das Verfahren ferner das Zählen von Folgendem beinhaltet:
- einer Anzahl von virtuellen lokalen Lizenzmanagern, die von dem ersten industriellen Sektor aus in dem zweiten industriellen Sektor bereitgestellt werden; und/oder
- einer Anzahl von Lizenzen der Dienstanwendung, die von dem ersten industriellen Sektor aus an den virtuellen lokalen Lizenzmanager übertragen werden.

10. Verfahren nach einem beliebigen der vorhergehenden Ansprüche, wobei der erste und der zweite industrielle Sektor jeweils ein Edge-Computing-Netzwerk mit Vielfachzugriff sind.

11. Industriedatenserver (IDS) zur Überwachung von Lizenzen einer Dienstanwendung, die über eine Vielzahl von industriellen Sektoren (DOM1, DOM2), die untereinander verbunden sind, hinweg verwaltet werden, wobei der Server dazu eingerichtet ist, mit einem industriellen Sektor der Vielzahl von industriellen Sektoren verbunden zu sein, und dazu konfiguriert ist, Schritte des Verfahrens nach einem beliebigen der vorhergehenden Ansprüche zu implementieren.

12. Computerprogramm, das Anweisungen zur Implementierung des Verfahrens nach einem der Ansprüche 1 bis 10 umfasst, wenn die Anweisungen durch einen Prozessor einer Computerverarbeitungsschaltung ausgeführt werden.

13. Entnehmbares oder nicht entnehmbares Datenspeichermedium, das teilweise oder vollständig von einem Computer oder einem Prozessor gelesen werden kann und Computerprogrammcodeanweisungen zur Ausführung jedes der Schritte des Verfahrens nach einem beliebigen der Ansprüche 1 bis 10 umfasst.

## Claims

1. Method for managing licences for a service application across a plurality of interconnected industrial sectors (DOM1, DOM2), the method comprising the steps of:
- selecting (S1), with a first industrial sector (DOM1) of the plurality of industrial sectors, a policy for delegating the service application to a second industrial sector (DOM2) of the plurality of industrial sectors;
- deploying (S3), from the first industrial sector, into the second industrial sector, a local virtual licence manager (LVLM2); and
- transmitting (S4), from the first industrial sector, a licence for the service application to said local virtual licence manager, the licence authorizing the use of the service application by the second industrial sector;
**characterized in that** the local virtual licence manager is deployed via a secure communication channel, the method further comprising configuring (S2), in accordance with the selected delegation policy, said secure communication channel being established between a first secure connector (SIC1) of the first industrial sector and a second secure connector (SIC2) of the second industrial sector.

2. Method according to Claim 1, wherein transmitting the licence for the service application to the local virtual licence manager comprises providing the licence to the first secure connector and/or to the second secure connector.

3. Method according to Claim 1 or 2, wherein configuring the secure communication channel comprises updating the second secure connector with respect to the first secure connector.

4. Method according to any one of the preceding claims, wherein the service application is configured to control a cyber-physical system (CPS1) of the first industrial sector, the method further comprising, upon the licence being received by the local virtual licence manager, executing (S5) a command of the cyber-physical system by means of the service application.

5. Method according to Claim 4, wherein the command of the cyber-physical system is executed upon a request-response pair of the licence being exchanged (S51, S52, S53) between the first industrial sector and the local virtual licence manager of the second industrial sector.

6. Method according to Claim 5, wherein exchanging the request-response pair of the licence comprises verifying (S51a; S51b; S52a; S52b; S53a; S53b) the transmitted licence and/or the policy for delegating the service application, the verification being implemented by at least one of the first secure connector and the second secure connector.

7. Method according to any one of the preceding claims, wherein deploying the local virtual licence manager comprises priorly downloading (S32) a virtual machine (VILM2) into the second industrial sector from the first industrial sector, the local virtual licence manager being deployed by said virtual machine.

8. Method according to Claim 7, further comprising locking, uninstalling or destroying the virtual machine.

9. Method according to any one of the preceding claims, wherein the method further comprises counting:
- a number of local virtual licence managers which are deployed from the first industrial sector, into the second industrial sector; and/or
- a number of licences for the service application which are transmitted, from the first industrial sector, to the local virtual licence manager.

10. Method according to any one of the preceding claims, wherein the first and the second industrial sector are each a multi-access edge computing network.

11. Industrial data server (IDS) for controlling the licences for a service application which are managed across a plurality of interconnected industrial sectors (DOM1, DOM2), said server being arranged to be connected to one industrial sector of said plurality of industrial sectors and configured to implement steps of the method according to any one of the preceding claims.

12. Computer program comprising instructions for implementing the method according to one of Claims 1 to 10, when said instructions are executed by a processor of a computer processing circuit.

13. Removable or irremovable data storage medium which can be read in part or in full by a computer or a processor, comprising code instructions of a computer program for executing each of the steps of the method according to any one of Claims 1 to 10.
